# FASCICULE DE BREVET EUROPEEN

(11) **EP 1 150 932 B1**
(45) Date de publication et mention de la délivrance du brevet: **27.11.2002**
(21) Numéro de dépôt: 00902704.6
(22) Date de dépôt: 03.02.2000
(51) Int. Cl.: C04B 28/14

(54) **ELEMENT DE CONSTRUCTION PREFABRIQUE A BASE DE PLATRE ET EN PARTICULIER PLAQUE A BASE DE PLATRE PRESENTANT UNE RESISTANCE AU FEU AMELIOREE**
VORGEFERTIGTES GIPSBAUELEMENT, INSBESONDERE GIPSBAUPLATTE, MIT HOHER FEUERBESTÄNDIGKEIT
PLASTER-BASED PREFABRICATED CONSTRUCTION ELEMENT, ESPECIALLY A PLASTER-BASED SLAB, WITH INCREASED FIRE RESISTANCE

(30) Priorité: 12.02.1999 FR 9901883
(43) Date de publication de la demande: 07.11.2001
(73) Titulaire: LAFARGE PLATRES, 84915 Avignon Cedex 9 (FR)
(72) Inventeur: LECLERQ, Claude, F-84210 Pernes Les Fontaines (FR)
(74) Mandataire: Guerre, Dominique
(86) Numéro de dépôt international: FR0000261
(87) Numéro de publication internationale: WO00047535

(56) Documents cités:
- WO-A-93/09066
- DE-A- 3 322 067
- FR-A- 2 507 176
- US-A- 4 664 707
- CHEMICAL ABSTRACTS, vol. 106, no. 24, 5 juin 1987 (1987-06-05) Columbus, Ohio, US; abstract no. 200912t, H.KAWAMURA: "Synthetic mineral fiber moldings for building materials" XP000183113 & JP 62 027383 A 5 février 1987 (1987-02-05)

## Description

La présente invention concerne les éléments de construction préfabriqués, résistants au feu, comprenant un substrat à base de plâtre durci et sec. Plus particulièrement, l'invention s'intéresse aux éléments de construction préfabriqués, ayant une épaisseur moyenne relativement faible, par exemple de un à plusieurs centimètres, selon une direction ou dimension préférentielle, avec une masse surfacique limitée, par exemple une dizaine de kg/m². A titre d'exemple préférentiel, mais non limitatif, on se référera aux éléments, soit du type plaque de plâtre revêtue par une feuille de renfort sur chaque face, par exemple une feuille de carton ou un mat de fibres minérales (verre par exemple), soit du type plaque fibreuse dans laquelle le plâtre contient dans la masse des fibres (par exemple cellulosiques) dispersées de manière homogène, et communément désignée sous le vocable anglais "GFB" (*Gypsum Fiber Board*).

Par "résistance au feu", on entend l'aptitude qu'a un tel élément de construction préfabriqué de créer une barrière au feu, cette aptitude s'entendant d'au moins l'une quelconque des propriétés suivantes :
- la stabilité dimensionnelle dudit élément, après une exposition à température élevée pendant un laps de temps prédéterminé ;
- la tenue mécanique dudit élément à température élevée ;
- l'isolation thermique à température élevée, apportée par ledit élément.

Selon les pays, cette résistance au feu est codifiée ou réglementée par des normes précises. Ainsi en République Fédérale d'Allemagne, pour les plaques dites GKF, dont les deux surfaces du substrat à base de plâtre sont revêtues chacune par une feuille de renfort comprenant des fibres cellulosiques à l'état enchevêtré, par exemple une feuille de carton, on se réfèrera à la norme DIN 18180 (version de Septembre 1989), et la norme DIN 4102 (partie IV) (version de Mars 1994) relative à des systèmes de cloison ou doublage de mur, comportant de telles plaques.

Ces deux normes exigent en particulier de soumettre des échantillons de plaques en traction, à des températures d'environ 850°C, pendant environ 30 minutes ou 1 heure. La Demanderesse utilise ces tests dans des conditions plus contraignantes, à savoir une température de 970° C ou 1020° C, pendant environ 1 heure, et détermine dans ces conditions la cohésion et le retrait des éprouvettes. S'agissant de la tenue mécanique, celle-ci doit exister au-delà de ½ heure ; et s'agissant de la stabilité dimensionnelle, le retrait doit être le plus faible possible, par exemple de l'ordre de 4 %, mesuré à l'état refroidi.

Aujourd'hui, à la meilleure connaissance de la Demanderesse, on ne sait pas fabriquer des plaques GFB ayant la résistance au feu des plaques dites GKF.

Conformément au document US-C-3 616 173, on a décrit et proposé un élément de construction préfabriqué, du type précédemment défini (faible épaisseur avec masse surfacique limitée), en l'occurrence une plaque de plâtre revêtue d'une feuille de carton sur chacune des faces du substrat de plâtre durci. Ce dernier est susceptible d'être obtenu par hydratation, par exemple par gâchage, d'une matière sèche comprenant en poids, au moins :
- majoritairement, soit de l'ordre de 71,5 à 99 % d'un sulfate de calcium hydratable (CaSO₄, 1/2H₂O) ;
- des fibres de verre, de l'ordre de 0,1 à 1 % ;
- un additif minéral comprenant un matériau argileux, de la silice colloïdale, de l'oxyde d'aluminium, ou un mélange de deux au moins de ces composés ; cet additif minéral représente une proportion de l'ordre de 0,5 à 20 %.

De telles plaques ont une tenue mécanique au feu limitée.

Conformément au document EP O 490 914, au nom de la Demanderesse, on a décrit et proposé des plaques de plâtre durci, qui sont non seulement résistantes au feu, mais qui ont l'aptitude à ne pas propager l'incendie. Selon ce document, le substrat de plâtre durci est revêtu sur ses deux faces par un mat de verre. Et le substrat de plâtre durci incorpore un additif minéral à base de silice cristallisée, talc et mica.

Par ailleurs, il est reconnu que toute silice cristalline, en tant que charge minérale, a des effets bénéfiques vis-à-vis de tout substrat de plâtre durci soumis au feu. En particulier, une silice cristalline, par exemple un quartz a un palier de dilatation vers 600°C, compensant en quelque sorte le retrait du plâtre proprement dit.

Ceci étant, la manipulation de silice cristalline (SiO₂) en poudre, pouvant en particulier comporter des particules de faible taille, par exemple inférieure à 5 microns, apparaît difficile et délicate, dans les conditions et environnement de toute fabrication industrielle.

La présente invention a pour objet d'améliorer la résistance au feu d'éléments de construction tels que précédemment définis, et en particulier de plaques fibreuses dites GFB ou de plaques de plâtre revêtues de carton, pour amener leurs performances au feu au niveau le plus élevé connu aujourd'hui, à savoir GKF, selon normes DIN 18180 et 4102 (partie IV) précédemment identifiées, et ce, en limitant la proportion de silice dans le substrat de plâtre.

Conformément à la présente invention, lorsqu'on utilise un additif minéral comportant un matériau argileux pour augmenter la résistance au feu, on a découvert que la proportion pondérale de silice minérale audit additif, pouvait être réduite jusqu'à 15 %, sans affecter la résistance au feu de l'élément de construction dans lequel ledit additif est incorporé et distribué, à la condition de compléter l'additif avec un matériau minéral inerte, compatible avec le matériau argileux, et dispersable dans le substrat de plâtre durci.

Par conséquent, selon l'invention, l'additif minéral comporte essentiellement un matériau argileux dont la quantité de silice cristalline est au plus égale à environ 15 % en poids dudit additif minéral, et un complément minéral inerte, compatible avec le matériau argileux et dispersable dans le substrat de plâtre durci.

Grâce à la présente invention, s'agissant par exemple de plaques fibreuses dites GFB ou de plaques de plâtre revêtues de carton, la proportion pondérale de l'additif minéral est telle que ce dernier confère à l'élément de construction une résistance au feu identique à celle d'une plaque dite GKF, définie par les normes allemandes DIN 18180 et 4102 (partie IV), en particulier un retrait n'excédant pas 4 %.

Au surplus, la solution selon l'invention ne modifie pas de manière substantielle les différents procédés de fabrication de ces éléments de construction, connus à ce jour, selon lesquels :
a) les plaques de plâtre sont obtenues par coulage d'une pâte à base de plâtre, entre deux feuilles de carton ou deux mats de fibre de verre ;
b) on filtre une boue ("slurry") à base de fibres cellulosiques et de plâtre, selon un processus de type papetier, pour obtenir des plaques dites GFB ;
c) on épand et on comprime par voie semi-humide ou semi-sèche un mélange de plâtre, de fibres cellulosiques et d'eau, toujours pour obtenir des plaques dites GFB.

Et la solution selon l'invention permet aussi de préserver les qualités d'usage de ces éléments de construction préfabriqués, par exemple leur "vissabilité", c'est-à-dire leur aptitude à supporter le montage de vis de fixation sans que la cohésion du substrat soit détruite.

La présente invention comporte également les caractéristiques secondaires suivantes :
- le complément minéral inerte est préférentiellement de la dolomie ;
- le matériau argileux comprend une illite et/ou du kaolin ;
- des fibres minérales compatibles avec le sulfate de calcium hydratable, par exemple des fibres de verre, sont distribuées dans le substrat de plâtre durci, dans une proportion pondérale de la matière sèche inférieure à 1 % ;
- l'additif minéral est dispersé dans le substrat à base de plâtre durci, avec une granulométrie telle que les particules ayant une taille inférieure ou égale à 63 µm représentent une proportion pondérale au moins égale à 85 % dudit additif minéral ;
- l'additif minéral comporte en proportions pondérales sensiblement égales, et le matériau argileux incorporant la silice, et le complément minéral inerte ;
- l'additif minéral représente une proportion pondérale de la matière sèche introduite au moins égale à 5 %, et préférentiellement au moins égale à 10 % ;
- l'élément de construction est susceptible d'être obtenu selon un procédé choisi dans le groupe constitué par tout procédé de fabrication de plaques fibreuses GFB, de type papetier, tout procédé du type avec compression dit semi-humide, ou semi-sec., et tout procédé de fabrication de plaques de plâtre par coulage d'une pâte de plâtre entre deux feuilles de carton (ou mat de fibres minérales, verre par exemple).

Dans toute la description ci-après, le terme "plâtre durci" sera réservé à du sulfate de calcium dihydraté ((CaSO₄, 2H₂O).

Par "sulfate de calcium hydratable", on entend un composé minéral ou une composition, consistant en ou comprenant un sulfate de calcium anhydre (anhydrite II ou III), un sulfate de calcium hémi-hydraté (CaSO₄, 1/2H₂O), quelle que soit la forme cristalline, α ou β, de ce dernier. Un tel composé est en général obtenu par cuisson d'un gypse naturel, ou d'un gypse reconstitué, par exemple sulfogypse.

Par "fibres cellulosiques", on entend des éléments discrets tels que fibres, filaments et copeaux, à base de cellulose naturelle, régénérée, recyclée, ou modifiée ; préférentiellement les fibres cellulosiques considérées sont celles entrant de manière générale dans la composition des papiers et cartons.

Par "fibres minérales", on entend des fibres inorganiques, par exemple fibres de verre. On peut également utiliser des fibres inorganiques céramiques silico-aluminates, telles qu'utilisées pour l'isolation des fours thermiques.

Conformément au Tableau 1, on décrit deux compositions respectivement dites (X) et (Y) d'un additif minéral conforme à la présente invention. L'additif (X) est celui employé conformément aux exemples ci-après 1.1 et 1.2.

**TABLEAU 1**

| | **Composition X** | **Composition Y** |
|---|---|---|
| **Composition minéralogique** | | |
| Kaolin | 25 | 25 |
| Illite | 10 | 10 |
| Quartz | 15 | 15 |
| Dolomie | 50 | 50 |

| **Composition chimique calcinée (%)** | | |
|---|---|---|
| SiO2 | 43 | 35 |
| TiO2 | 1,1 | 0,9 |
| Al2O3 | 15 | 13 |
| Fe2O3 | 1,6 | 1,3 |
| K2O | 1,2 | 1,1 |
| CaO | 23 | 30 |
| MgO | 14 | 18 |

| **Granulométrie** | | |
|---|---|---|
| Refus à 63 µm | < 15 % | < 10 % |
| Refus à 200 µm | | < 1 % |
| Perte au feu à 900 % | 26,5 % | 22,6 % |

Conformément à la présente invention, l'additif minéral présente en outre les caractéristiques de composition chimique suivantes :
- sa teneur pondérale en silice est comprise entre 30 et 50 %, et préférentiellement entre 35 et 45 % ;
- sa teneur pondérale en CaO est comprise entre 20 et 35 %, et préférentiellement entre 20 et 30 % ;
- sa teneur pondérale en MgO est comprise entre 10 et 25 %, et préférentiellement entre 10 et 20 %.

### EXEMPLES :

### 1/1 Fabrication de plaques fibrées GFB par procédé papetier, par filtration par compression, avec une forte quantité d'eau introduite au départ (rapport pondéral entre l'eau et le sulfate de calcium hydratable compris entre 300 et 800 %).

La plaque est fabriquée par les étapes successives suivantes :
■ Préparation d'une pulpe par mélange de 8 litres d'eau (du robinet, ou d'eau issue du recyclage du filtrat de plaques) avec 273 g de papier journal ou de fibres de cellulose régénérée, puis pulpage avec un mélangeur RAYNERI ® modèle Turbotest 207370, pendant 20 minutes à vitesse 6, puis pendant 25 minutes à vitesse 10.
■ Pesage d'une quantité de pulpe dans le bol d'un appareil Hobart ® modèle N-50G.
■ Introduction dans la pulpe d'une quantité de fibres de verre Vétrotex ® E518 22.
■ Pesage, dans un récipient séparé, d'une quantité de sulfate de calcium hydratable (CaSO₄, ½H₂O) obtenu par cuisson d'un gypse issu de la désulfuration de fumées.
■ Introduction dans ledit récipient séparé, du sulfate de calcium hydratable pesé, et mélange par un moyen mécanique approprié d'une quantité d'additif minéral de formule (X).
■ Introduction du sulfate de calcium hydratable ainsi adjuvanté, dans l'appareil Hobart et malaxage à la vitesse 1 pendant 15 secondes, avec une pale N5B NSF, raclage pendant 15 secondes, et malaxage à la vitesse 1 pendant 90 secondes.
■ Dépose de la pâte ainsi obtenue dans un moule muni d'une toile de filtration perméable, de dimensions 25,5 x 25,5 cm² ou 60 x 40 cm² selon la taille du désirée de la plaque.
■ Pressage avec une presse jusqu'à obtention d'un gâteau d'environ 12,5 mm d'épaisseur.
■ Application de la pression pendant au moins 20 secondes pour évacuer l'eau à travers des toiles de filtration, identiques à celles de l'équipement industriel.
■ Démoulage.
■ Conservation à température ambiante, jusqu'à hydratation complète du sulfate de calcium.
■ Séchage avec un profil de température approprié, et ce sans calciner le plâtre durci.

Pour sept essais, le Tableau 2 ci-après résume les caractéristiques des plaques ainsi obtenues, ayant une épaisseur d'environ 12,5 mm, fabriquées avec ce protocole dans un moule de dimensions 25,5 x 25,5 cm².

La durée en minutes, de tenue au feu de l'éprouvette, et le retrait en pourcentages de l'éprouvette, sont mesurées dans les conditions des normes DIN 18180 et DIN 4102.

Il en est de même pour le retrait de l'éprouvette exprimé en pourcentage, à l'état refroidi.

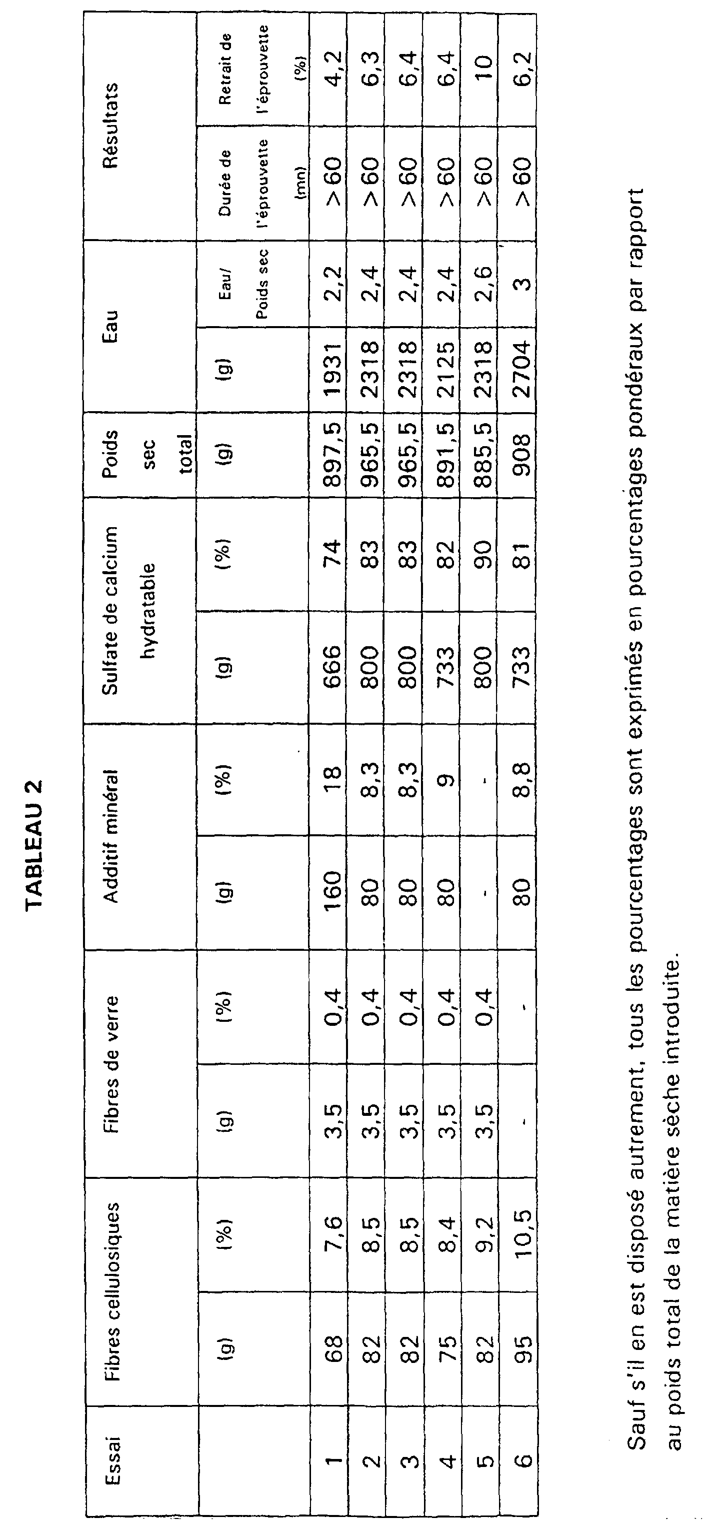

Le dernier essai 7 est un essai témoin : la plaque est réalisée sans additif minéral et sans fibres de verre. Sans additif minéral selon l'invention, le retrait de l'éprouvette est très important.

Le cinquième essai correspond à une plaque réalisée sans additif minéral, mais avec fibres de verre. Ces dernières ne permettent pas de réduire le retrait de l'éprouvette.

Les autres essais, réalisés avec l'additif minéral, montrent que le retrait est significativement réduit, même sans ajout de fibres de verre (cf. sixième essai).

### 1/2 Fabrication de plaques fibrées type GFB par compression selon le procédé semi-humide ou semi-sec

La plaque est fabriquée après :
■ Préparation d'une bourre de papier par broyage de papiers journaux dans un appareil PALLMAN® , type PMKS 460/8 avec un tamis de 2 mm.
■ Pesage d'une quantité de bourre et introduction dans un malaxeur LODIGE® de type M20G.RE.
■ Pesage, dans un récipient séparé, d'une quantité de sulfate de calcium hydratable (CaSO₄, ½H₂O), obtenu par cuisson d'un dihydrate issu de la désulfuration de fumées.
■ Introduction dans ce sulfate de calcium hydratable et mélange par un moyen mécanique approprié d'une quantité d'additif minéral de formule (X).
■ Introduction dans le sulfate de calcium hydratable ainsi additivé et ainsi obtenu, d'une quantité de fibres de verre Vétrotex® E518 22.
■ Introduction du mélange ci-dessus, contenant les fibres (bourre) dans le malaxeur LODIGE® de type M20G.RE, et malaxage pendant 30 minutes.
■ Dépose du mélange final dans un moule de dimensions 25,5 x 25,5 cm² ou 60 x 40 cm² selon la taille désirée de la plaque, et arrosage avec environ la même quantité d'eau (rapport eau/solides égal à environ 0,5).
■ Pressage jusqu'à obtention d'un gâteau de 12,5 mm d'épaisseur.
■ Application de la pression pendant au moins 20 secondes, pour évacuer l'eau excédentaire et l'air à travers la toile de drainage qui se situe dans la partie inférieure du filtre et qui est identique à celle de l'équipement industriel.
■ Démoulage.
■ Conservation à température ambiante jusqu'à hydratation complète du sulfate de calcium.
■ Séchage avec un profil de température approprié au départ de l'eau sans calciner le plâtre durci.

Pour deux essais, le Tableau 3 suivant résume les caractéristiques des plaques ayant une épaisseur d'environ 12,5 mm, fabriquées avec ce protocole dans un moule de dimensions 25.5*25.5 cm², et avec les mêmes conditions de test décrites dans les normes DIN 18180 et DIN 4102.

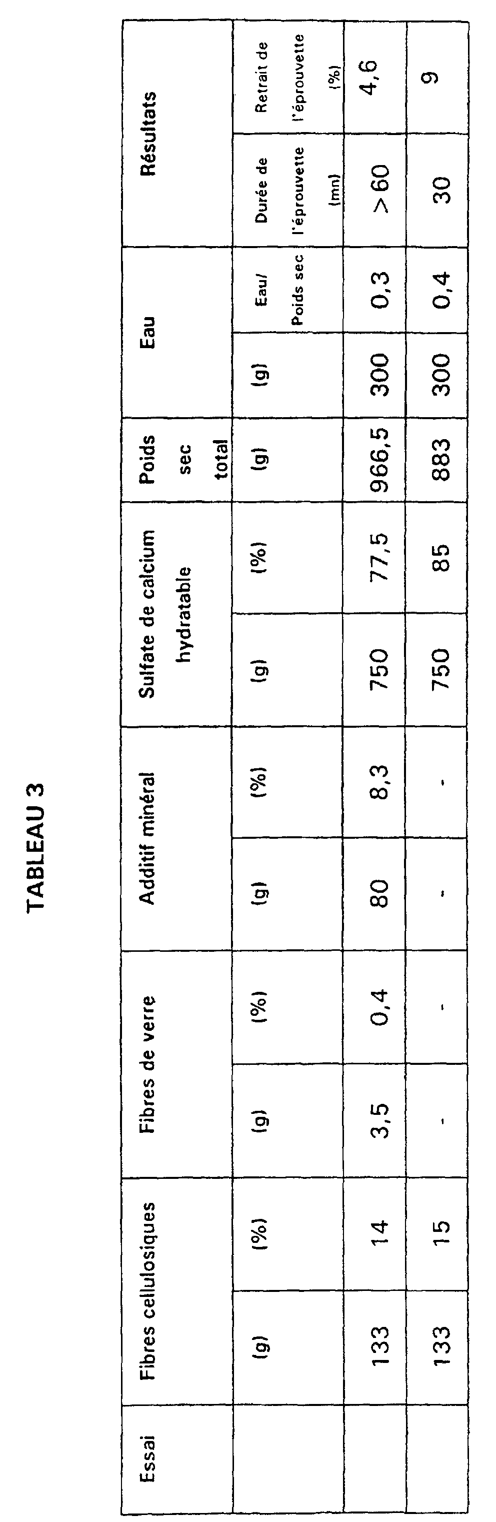

Le Tableau 3 ci-dessus montre que, lorsque l'éprouvette est réalisée sans additif minéral selon l'invention, elle casse au bout de 30 minutes. Le retrait mesuré à ce moment atteint 9 %.

### 2/1 Essais comparatifs d'éprouvettes obtenues en laboratoire et ligne de production industrielle, pour des plaques de plâtre cartonnées obtenues par un procédé de coulage de pâte de plâtre entre deux feuilles de carton.

Le Tableau 4 définit différents essais, effectués de manière comparative entre des charges minérales traditionnelles, et l'additif minéral selon la présente invention. Dans ce tableau :
- "quartz C400" signifie une silice cristalline fine, vendue par la Société SIFRACO ;
- "kaolin K13" signifie un silicate kaolinique fini, vendu par la Société SIKA ;
- dolomie de la Société LHOIST de granulométrie supérieure à 200 microns.

Par "plaque de plâtre", on entend des plaques dont le substrat de plâtre durci a une épaisseur de 12,5 mm, et est revêtu de part et d'autre par des feuilles de carton, liées au plâtre, ayant les caractéristiques suivantes :
- épaisseur des feuilles de carton : 0,3 mm environ ;
- masse surfacique de la plaque : 10,5 kg/mm² environ.

Le plâtre utilisé a été obtenu par cuisson d'un sulfogypse.

**TABLEAU 4**

| **Retrait au feu de plaques de plâtre** | | | | | |
|---|---|---|---|---|---|
| **N°Essai** | **Type de plaque** | **Additif minéral** | | **Poids plaque (Kg/m**^{**2**}**)** | **Retrait à 1020°C à 90 mn** |
| | | **Type** | **Quantité (g/m**^{**2**}**)** | | |
| 1 | Barrettes laboratoire | | | 10 | 13 |
| 2 | Barrettes laboratoire | | | 10,4 | 12 |
| 3 | Mini plaques laboratoire | Quartz C400 | 450 | 10,3 | 5,4 |
| 4 | Mini plaques laboratoire | Composition X | 1000 | 10,4 | 3,7 |
| 5 | Mini plaques laboratoire | Dolomie | 1000 | 10,6 | 9,6 |
| 6 | Mini plaques laboratoire | Kaolin + Dolomie | 900 | 10,4 | 3,5 |
| 7 | Industrielle | Quartz C400 | 450 | 10,4 | 6,2 |
| 8 | Industrielle | Composition X | 900 | 10,3 | 3,6 |
| 9 | Industrielle | Composition X | 1200 | 10,2 | 3,2 |
| 10 | Industrielle | Composition X | 700 | 10 | 4,4 |

Les essais 1 et 2 sont des essais témoin.

On constate que les différents ajouts minéraux, autres que l'additif minéral selon la présente invention, améliorent le retrait au feu. Mais les meilleurs résultats sont obtenus avec un additif minéral selon l'invention, et permettent d'atteindre les performances de résistance au feu des plaques dites "GKF".

La dolomie seule, notamment cf. essai N° 6, n'a pas d'effet très favorable sur le retrait.

### 2/2 Essais comparatifs de -résistance au feu, suivant les normes de plaques dites GKF, d'éprouvettes de plaques de plâtre cartonnées fabriquées sur une ligne industrielle, et contenant l'additif minéral selon l'invention et des fibres de verre.

**TABLEAU 5**

| **N° essai** | **Fibres de verre (g/m**^{**2**}**)** | **Additif minéral Y (g/m**^{**2**}**)** | **Poids (kg/m**^{**2**}**)** | **Densité** | **(1)** | **(2)** | **(3)** | **(4)** |
|---|---|---|---|---|---|---|---|---|
| 1 | 30 | 750 | 11,2 | 0,91 | 2,8 | 2,1 | 3,4 | 3,9 |
| 2 | 30 | 750 | 11,2 | 0,91 | 3,55 | 1,1 | 3,8 | 3,15 |
| 3 | 30 | 750 | 11,2 | 0,91 | 2 | 1,8 | 4,2 | 2,6 |
| 4 | 30 | 800 | 11,4 | 0,93 | 2,6 | 1,6 | 2,6 | 2,4 |
| 5 | 30 | 800 | 11,4 | 0,93 | 1,8 | 1,8 | 2,8 | 2,6 |
| 6 | 30 | 800 | 11,4 | 0,93 | 1,2 | 1,8 | 2,4 | 2,2 |

| | | | | | | | | |
|---|---|---|---|---|---|---|---|---|
| **(1)** : retrait à 60 mn dans le sens longitudinal, de l'essai feu en traction 0,16 kg/cm² à 970°C ; | | | | | | | | |
| **(2)** : retrait à 30 mn dans le sens transversal, de l'essai feu en traction 0,16 kg/cm² à 970°C ; | | | | | | | | |
| **(3)** : retrait à 60 mn dans le sens longitudinal, de l'essai feu en traction 0,16 kg/cm² à 1020°C ; | | | | | | | | |
| **(4)** : retrait à 30 mn dans le sens transversal, de l'essai feu en traction 0,16 kg/cm² à 1020°C. | | | | | | | | |

On constate que le retrait des éprouvettes réalisées avec l'additif minéral selon l'invention est faible, à savoir inférieur à 4 %.

## Revendications

1. Elément de construction préfabriqué, résistant au feu, ayant une épaisseur moyenne relativement faible, comprenant un substrat à base de plâtre durci, ledit substrat étant susceptible d'être obtenu par hydratation, par exemple gâchage, d'une matière sèche comprenant majoritairement au moins un sulfate de calcium hydratable, et un additif minéral sous forme discrète, comprenant un matériau argileux, **caractérisé en ce que,** l'additif minéral comporte essentiellement un matériau argileux dont la quantité de silice cristalline est au plus égale à environ 15 % en poids dudit additif minéral, et un complément minéral inerte, compatible avec le matériau argileux et dispersable dans le substrat de plâtre durci.

2. Elément selon la revendication 1, **caractérisé en ce que** la proportion pondérale de l'additif minéral est telle que ce dernier confère audit élément de construction une résistance au feu identique à celle d'une plaque dite GKF, définie par les normes allemandes DIN 18180 et 4102 (partie IV), en particulier un retrait n'excédant pas 4 %.

3. Elément selon la revendication 1, **caractérisé en ce que** le complément minéral inerte est de la dolomie.

4. Elément selon la revendication 1, **caractérisé en ce que** le matériau argileux comprend une illite et/ou du kaolin.

5. Elément selon la revendication 1, **caractérisé en ce que** les deux faces d'une plaque de plâtre durci sont revêtues chacune par un mat de fibres minérales, par exemple fibres de verre.

6. Elément selon la revendication 1, **caractérisé en ce que** des fibres minérales compatibles avec le sulfate de calcium hydratable, par exemple des fibres de verre, sont distribuées dans le substrat de plâtre durci, dans une proportion pondérale de la matière sèche inférieure à 1 %.

7. Elément selon la revendication 1, **caractérisé en ce que** les deux surfaces du substrat de plâtre durci sont revêtues chacune par une feuille de carton, liée au substrat.

8. Elément selon la revendication 1, **caractérisé en ce que** l'additif minéral est dispersé dans le substrat à base de plâtre durci, avec une granulométrie telle que les particules ayant une taille inférieure ou égale à 63 µm représentent une proportion pondérale au moins égale à 85 % dudit additif minéral.

9. Elément selon la revendication 1, **caractérisé en ce que** l'additif minéral comporte en proportions pondérales sensiblement égales le matériau argileux incorporant la silice et le complément minéral inerte.

10. Elément selon la revendication 1, **caractérisé en ce que** l'additif minéral représente une proportion pondérale de la matière sèche introduite au moins égale à 5 %, et préférentiellement au moins égale à 10 %.

11. Elément de construction selon l'une quelconque des revendications 1 à 10, **caractérisé en ce qu'**il est susceptible d'être obtenu selon un procédé choisi dans le groupe constitué par tout procédé de fabrication de plaques fibreuses GFB, de type papetier, tout procédé du type avec compression dit semi-humide ou semi-sec, et tout procédé de fabrication de plaques de plâtre par coulage d'une pâte de plâtre entre deux feuilles de carton ou mat de fibres minérales.

12. Additif minéral sous forme discrète, comprenant un matériau argileux, **caractérisé en ce que** l'additif minéral en poudre comporte essentiellement un matériau argileux dont la quantité de silice cristalline est au plus égale à environ 15 % en poids dudit additif minéral, et un complément minéral inerte, par exemple à base de dolomie, compatible avec le matériau argileux, et dispersable dans tout substrat de plâtre durci.

13. Utilisation d'un additif selon la revendication 12, pour la fabrication d'un élément de construction comprenant un substrat à base de plâtre.

## Patentansprüche

1. Feuerfestes Fertigbauelement, das eine relativ geringe mittlere Dicke aufweist, mit einem Substrat auf der Basis von ausgehärtetem Gips, wobei das Substrat durch Hydratation, beispielsweise Anrühren eines Trockenstoffes erhalten werden kann, der hauptsächlich zumindest ein hydratisierbares Kalziumsulfat und ein mineralisches Additiv in getrennter Form aufweist, das ein toniges Material aufweist, **dadurch gekennzeichnet, daß** das mineralische Additiv im wesentlichen ein toniges Material, dessen Menge an kristalliner Kieselerde höchstens gleich etwa 15 Gew.-% des mineralischen Additivs beträgt, und ein inertes Ergänzungsmineral aufweist, das mit dem tonigen Material kompatibel und in dem Substrat aus ausgehärtetem Gips dispergierbar ist.

2. Element nach Anspruch 1, **dadurch gekennzeichnet, daß** der Gewichtsanteil des mineralischen Additivs derart ist, daß letzteres dem Bauelement eine Feuerfestigkeit, die mit derjenigen einer als GKF bezeichneten Platte identisch ist, die durch die deutschen Normen DIN 18180 und 4102 (Teil IV) definiert ist, insbesondere eine Schrumpfung nicht über 4 %, verleiht.

3. Element nach Anspruch 1, **dadurch gekennzeichnet, daß** das inerte Ergänzungsmineral Dolomit ist.

4. Element nach Anspruch 1, **dadurch gekennzeichnet, daß** das tonige Material ein Illit und/oder Kaolin ist.

5. Element nach Anspruch 1, **dadurch gekennzeichnet, daß** die beiden Seiten einer Platte aus ausgehärtetem Gips jeweils mit einer Matte aus Mineralfasern, beispielsweise Glasfasern, bedeckt sind.

6. Element nach Anspruch 1, **dadurch gekennzeichnet, daß** mit dem hydratisierbaren Kalziumsulfat kompatible Mineralfasern, beispielsweise Glasfasern, in dem Substrat aus ausgehärtetem Gips mit einem Gewichtsanteil des Trockenstoffes von weniger als 1 % verteilt sind.

7. Element nach Anspruch 1, **dadurch gekennzeichnet, daß** die beiden Flächen des Substrats aus ausgehärtetem Gips jeweils mit einem Kartonblatt, das mit dem Substrat verbunden ist, bedeckt sind.

8. Element nach Anspruch 1, **dadurch gekennzeichnet, daß** das mineralische Additiv in dem Substrat auf der Basis von ausgehärtetem Gips mit einer solchen Granulometrie dispergiert ist, daß die Partikel mit einer Größe von weniger oder gleich 63 µm einen Gewichtsanteil von zumindest gleich 85 % des mineralischen Additivs ausmachen.

9. Element nach Anspruch 1, **dadurch gekennzeichnet, daß** das mineralische Additiv in etwa gleichen Gewichtsanteilen das tonige Material, das die Kieselerde enthält, und das inerte Ergänzungsmineral aufweist.

10. Element nach Anspruch 1, **dadurch gekennzeichnet, daß** das mineralische Additiv einen Gewichtsanteil des eingeführten Trockenstoffes von zumindest gleich 5 % und vorzugsweise zumindest gleich 10 % ausmacht.

11. Bauelement nach einem der Ansprüche 1 bis 10, **dadurch gekennzeichnet, daß** es nach einem Verfahren erhalten werden kann, das aus der Gruppe ausgewählt ist, die jegliche Herstellungsverfahren von Faserplatten GFB von der Art Papierherstellung, jegliche Verfahren von der Art mit halbtrokken oder halbfeucht bezeichneter Pressung und jegliche Herstellungsverfahren von Gipsplatten durch Gießen einer Gipsplatte zwischen zwei Kartonblätter oder Mineralfasermatten umfaßt.

12. Mineralisches Additiv in getrennter Form, das ein toniges Material aufweist, **dadurch gekennzeichnet, daß** das pulverförmige mineralische Additiv im wesentlichen ein toniges Material, dessen Menge an kristalliner Kieselerde höchstens gleich etwa 15 Gew.-% des mineralischen Additivs beträgt, und ein inertes Ergänzungsmaterial aufweist, beispielsweise auf der Basis von Dolomit, das mit dem tonigen Material kompatibel und in jeglichem Substrat aus ausgehärtetem Gips dispergierbar ist.

13. Verwendung eines Additivs nach Anspruch 12 zur Herstellung eines Bauelements, das ein Substrat auf der Basis von Gips aufweist.

## Claims

1. Fire-resistant prefabricated structural element having a relatively small average thickness, comprising a substrate based on cured plaster, the said substrate being able to be obtained by hydration, for example mixing, of dry matter comprising mostly at least a hydratable calcium sulphate, and a mineral additive in discrete form, comprising a clayey material, **characterized in that** the mineral additive essentially comprises a clayey material, the quantity of crystalline silica of which is at most equal to approximately 15% by weight of the said mineral additive, and an inert mineral supplement compatible with the clayey material and dispersible in the cured-plaster substrate.

2. Element according to Claim 1, **characterized in that** the proportion by weight of the mineral additive is such that the latter gives the said structural element a fire resistance identical to that of a so-called GKF board, defined by the German standards DIN 18180 and 4102 (part IV), in particular a shrinkage not exceeding 4%.

3. Element according to Claim 1, **characterized in that** the inert mineral supplement is dolomite.

4. Element according to Claim 1, **characterized in that** the clayey material includes an illite and/or kaolin.

5. Element according to Claim 1, **characterized in that** the two faces of a cured-plaster board are each coated with a mat of mineral fibres, for example glass fibres.

6. Element according to Claim 1, **characterized in that** mineral fibres compatible with the hydratable calcium sulphate, for example glass fibres, are distributed in the cured-plaster substrate in a proportion by weight of dry matter of less than 1%.

7. Element according to Claim 1, **characterized in that** the two surfaces of the cured-plaster substrate are each coated with a cardboard sheet bonded to the substrate.

8. Element according to Claim 1, **characterized in that** the mineral additive is dispersed in the cured-plaster-based substrate with a particle size distribution such that the particles having a size of less than or equal to 63 µm represent a proportion by weight of at least 85% of the said mineral additive.

9. Element according to Claim 1, **characterized in that** the mineral additive comprises, in approximately equal proportions by weight, the clayey material incorporating the silica and the inert mineral supplement.

10. Element according to Claim 1, **characterized in that** the mineral additive represents a proportion by weight of the dry matter introduced of at least 5% and preferably at least 10%.

11. Structural element according to any one of Claims 1 to 10, **characterized in that** it can be obtained using a process chosen from the group consisting of any process for manufacturing GFB fibrous boards, of the papermaking type, any process of the type with so-called semi-wet or semi-dry compression and any process for manufacturing plasterboards by casting a plaster slurry between two cardboard sheets or mat of mineral fibres.

12. Mineral additive in discrete form, comprising a clayey material, **characterized in that** the mineral additive in powder form essentially comprises a clayey material, the quantity of crystalline silica of which is at most approximately 15% by weight of the said mineral additive, and an inert mineral supplement, for example based on dolomite, compatible with the clayey material and dispersible in any cured-plaster substrate.

13. Use of an additive according to Claim 12 for the manufacture of a structural element comprising a plaster-based substrate.
